# EUROPEAN PATENT SPECIFICATION

(11) **EP 4 322 289 B1**
(45) Date of publication and mention of the grant of the patent: **02.12.2026**
(21) Application number: 23781322.5
(22) Date of filing: 28.03.2023
(51) Int. Cl.: H01M 10/658, H01M 50/242, H01M 50/211, H01M 50/502, H01M 50/249, H01M 10/625, H01M 50/383

(54) **BATTERY MODULE WITH REINFORCED SAFETY**
BATTERIEMODUL MIT VERSTÄRKTER SICHERHEIT
MODULE DE BATTERIE AVEC SÉCURITÉ RENFORCÉE

(30) Priority: 31.03.2022 KR 20220040406; 06.03.2023 KR 20230029081
(43) Date of publication of application: 14.02.2024
(60) Divisional application: 26198098.1 / 4 822 868
(73) Proprietor: LG Energy Solution, Ltd., Seoul 07335 (KR)
(72) Inventor: JANG, Sung-Hwan, Daejeon 34122 (KR); PARK, Myung-Ki, Daejeon 34122 (KR); SEONG, Jun-Yeob, Daejeon 34122 (KR)
(74) Representative: Plasseraud IP
(86) International application number: PCT/KR2023/004137
(87) International publication number: WO 2023/191467

(56) References cited:
- EP-A1- 3 958 381
- WO-A1-2021/153938
- JP-A- 2020 165 483
- JP-A- 2020 187 859
- KR-A- 20200 106 378
- KR-A- 20210 098 331
- KR-B1- 101 730 961
- US-A1- 2014 193 685
- US-A1- 2016 336 627
- US-A1- 2021 074 960
- US-A1- 2022 367 934

## Description

### TECHNICAL FIELD

The present application claims priority to Korean Patent Application No. 10-2022-0040406 filed on March 31, 2022 and Korean Patent Application No. 10-2023-0029081 filed on March 6, 2023 in the Republic of Korea.

The present disclosure relates to a battery, and more particularly, to a battery module with reinforced safety, and a battery pack and a vehicle including the battery same.

### BACKGROUND ART

As the demand for portable electronic products such as smart phones, tablet PCs, and smart watches is greatly increasing and electric vehicles come into wide use, batteries mounted thereto, particularly secondary batteries capable of repeated charging and discharging, are being actively researched.

Currently commercialized secondary batteries include nickel cadmium battery, nickel hydrogen battery, nickel zinc battery, lithium secondary battery, and so on. Among these, the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses a lithium-based oxides and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed therebetween, and an exterior, or a battery case, for hermetically accommodating the electrode assembly together with an electrolyte.

Generally, the lithium secondary batteries may be classified into a can-type secondary battery having an electrode assembly included in a metal can and a pouch-type secondary battery having an electrode assembly included in a pouch of an aluminum laminate sheet, depending on the shape of the exterior.

Recently, secondary batteries are widely used for driving or energy storage not only in small devices such as portable electronic devices but also in medium and large device such as electric vehicles and energy storage systems (ESS). These secondary batteries may constitute one battery module in such a form that a plurality of secondary batteries are electrically connected and are stored together in a module case. An example of battery module is disclosed in WO 2021/153938, KR 2020/0106378 and US 2014/193685. In addition, a plurality of battery modules may be connected to form one battery pack.

However, when a plurality of secondary batteries (battery cells) or a plurality of battery modules are concentrated in a narrow space as described above, they may be vulnerable to a thermal event. In particular, when an event such as thermal runaway occurs inside any one of the battery cells, a high-temperature gas, flame, or heat may be generated. If the gas, flame, or heat is transferred to another battery cell included in the same battery module, an explosive chain reaction situation such as thermal propagation may occur. In addition, such a chain reaction may cause accidents such as fire or explosion in the corresponding battery module, and may also cause fire or explosion in other battery modules.

Moreover, in the case of a medium-sized or large-sized battery module or battery pack such as an electric vehicle, a large number of battery cells are included to increase output and/or capacity, so that the risk of thermal chain reaction may increase. Moreover, in the vicinity of the battery pack mounted to an electric vehicle or the like, a user such as a driver may exist. Therefore, if a thermal event occurring in a specific battery module is not properly controlled and a chain reaction occurs, not only great property damage but also personal injury may be caused.

### DISCLOSURE

### Technical Problem

The present disclosure is designed to solve the problems of the related art, and therefore the present disclosure is directed to providing a battery module with an improved structure to reinforce safety when a thermal event occurs inside the battery module, and a battery pack and a vehicle including the battery module.

However, the technical problem to be solved by the present disclosure is not limited to the above, and other problems not mentioned herein will be clearly understood by those skilled in the art from the following disclosure.

### Technical Solution

In one aspect of the present disclosure, there is provided a battery module, comprising: two or more cell banks, each cell bank including a plurality of battery cells stacked in at least one direction; a module case configured to accommodate the plurality of battery cells in an inner space; and a blocking member including a heat transfer preventing unit configured to prevent heat transfer between the adjacent battery cells and a flame transfer preventing unit provided to an inner side of the heat transfer preventing unit and configured to block a flame between the adjacent battery cells characterized in that the blocking member is only interposed between two different cell banks.

Here, the heat transfer preventing unit may be made of a material having lower thermal conductivity than the flame transfer preventing unit.

In addition, the flame transfer preventing unit may be made of a material having a higher melting point than the heat transfer preventing unit.

In addition, the blocking member may be configured to expose the flame transfer preventing unit towards the battery cell when the heat transfer preventing unit is melted.

In addition, the blocking member may be configured in a sheet form.

In addition, the blocking member may be configured such that a flame transfer preventing sheet is interposed inside a heat transfer prevention sheet.

In addition, the blocking member may be configured to absorb swelling of the battery cell.

In addition, the heat transfer preventing unit may be formed so that a center portion has a greater thickness than an end portion.

The flame transfer preventing unit has a groove formed in a concave shape in a center portion.

In addition, the flame transfer preventing unit may be configured such that at least one side of the groove formed in the center portion is open to the outside.

In addition, each of the plurality of battery cells may be a pouch-type secondary battery having an accommodation portion and a sealing portion, and the flame transfer preventing unit may be formed so that, between the plurality of battery cells, a portion facing the sealing portion has a greater thickness than a portion facing the accommodation portion.

In addition, the blocking member may be arranged in plurality along a stacking direction of the plurality of battery cells, and two or more of the plurality of blocking members may be configured to have difference compression ratios.

In addition, the plurality of battery cells may include two or more cell banks connected in series, and the blocking member may be interposed between different cell banks.

In another aspect of the present disclosure, there is also provided a battery pack, comprising the battery module according to the present disclosure.

In still another aspect of the present disclosure, there is also provided a vehicle, comprising the battery module according to the present disclosure.

### Advantageous Effects

According to the present disclosure, when a thermal event occurs inside a battery module, the event may be effectively controlled.

In particular, according to an embodiment of the present disclosure, when gas, flame, or heat is generated from a specific battery cell inside the battery module, the propagation of gas and/or heat to other battery cells included in the corresponding battery module may be blocked.

Moreover, according to an embodiment of the present disclosure, when a lot of heat is generated due to the occurrence of a thermal event, heat transfer between cells may be blocked, and when a flame occurs due to an intensified thermal event, flame transfer between cells may be blocked.

That is, in the present disclosure, according to the degree of a thermal event, event control such as heat blocking and flame blocking may be appropriately and sequentially performed.

Accordingly, according to an embodiment of the present disclosure, since regions are divided between cells or between cell groups inside the battery module, even if a thermal event occurs in a specific battery cell, it is possible to prevent an explosive chain reaction from occurring.

In addition, according to this embodiment of the present disclosure, it is possible to reduce the possibility of fire or explosion of the battery module, or to delay the time. In particular, when the fire or explosion time of the battery module is delayed, sufficient time is secured for a battery user such as a vehicle driver to evacuate, thereby reducing human damage.

The present disclosure may have various other effects in addition to the above, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an assembled perspective view schematically showing a battery module according to an embodiment of the present disclosure, and FIG. 2 is an exploded perspective view showing the battery module of FIG. 1.
FIG. 3 is a cross-sectional view taken along the line A1-A1' of FIG. 1, and FIG. 4 is a cross-sectional view taken along the line A2-A2' of FIG. 1
FIG. 5 is a perspective view schematically showing the configuration of a blocking member according to an embodiment of the present disclosure.
FIGS. 6 and 7 are a cross-sectional view taken along the line A3-A3' of FIG. 5 and a cross-sectional view taken along the line A4-A4' of FIG. 5.
FIG. 8 is a cross-sectional view schematically showing the configuration of a blocking member according to another embodiment of the present disclosure.
FIG. 9 is a cross-sectional view schematically showing a partial cross-sectional configuration of a battery module according to another embodiment of the present disclosure.
FIG. 10 is an exploded cross-sectional view showing the configuration of FIG. 9.
FIG. 11 is a cross-sectional view schematically showing a partial configuration of the blocking member according to an embodiment of the present disclosure.
FIG. 12 is a cross-sectional view schematically showing the configuration of a blocking member according to still another embodiment of the present disclosure.
FIG. 13 is a cross-sectional view schematically showing the configuration of a blocking member according to still another embodiment of the present disclosure.
FIG. 14 is a cross-sectional view schematically showing the configuration of a blocking member according to still another embodiment of the present disclosure.
FIG. 15 is a cross-sectional view schematically showing the configuration of a blocking member according to still another embodiment of the present disclosure.
FIG. 16 is a perspective view schematically showing the configuration of a flame transfer preventing unit provided in the blocking member according to still another embodiment of the present disclosure.
FIG. 17 is a perspective view schematically showing the configuration of a flame transfer preventing unit provided in the blocking member according to still another embodiment of the present disclosure.
FIG. 18 is a perspective view schematically showing the configuration of a flame transfer preventing unit provided in the blocking member according to still another embodiment of the present disclosure.
FIG. 19 is a cross-sectional view taken along the line A4-A4' of FIG. 18.
FIG. 20 is a diagram schematically showing a partial configuration of the battery module according to an embodiment of the present disclosure, as viewed from the top.
FIG. 21 is an exploded perspective view showing a partial configuration of the battery module according to still another embodiment of the present disclosure.
FIGS. 22 and 23 are drawings showing the configuration of different blocking members included in the battery module of FIG. 21.
FIG. 24 is an exploded perspective view showing the battery module according to still another embodiment of the present disclosure.
FIG. 25 is a cross-sectional view of the battery module of FIG. 24.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

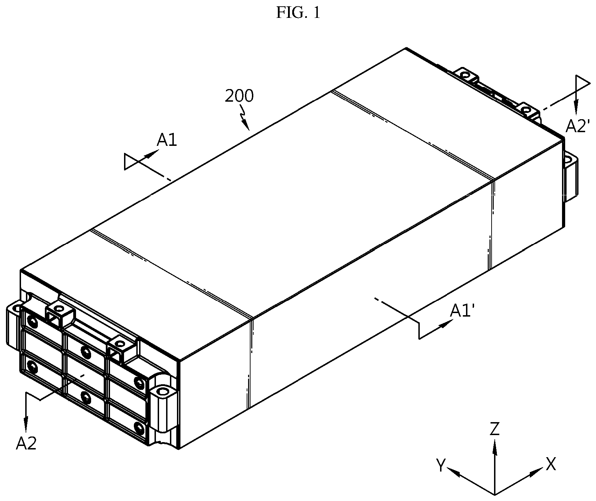

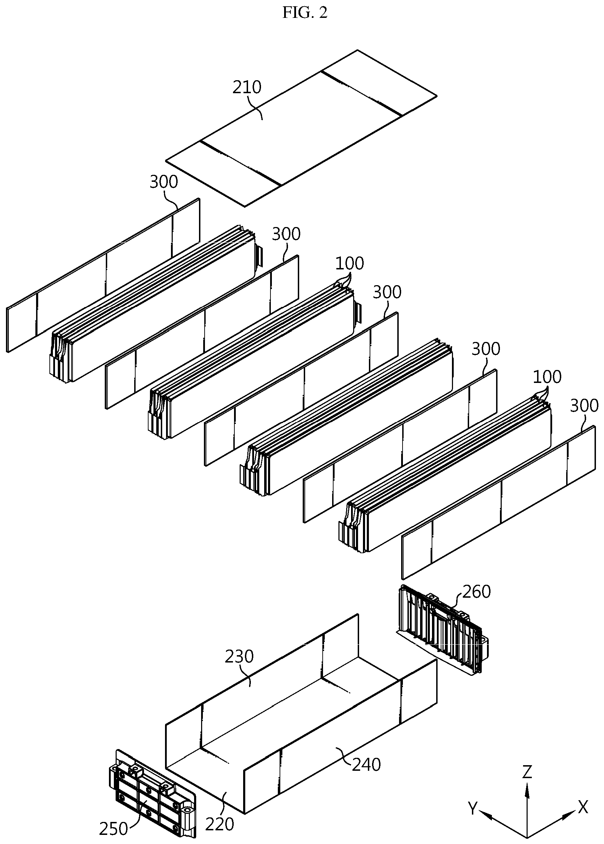

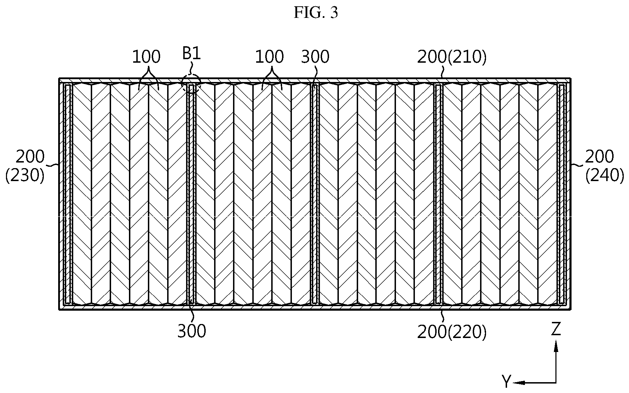

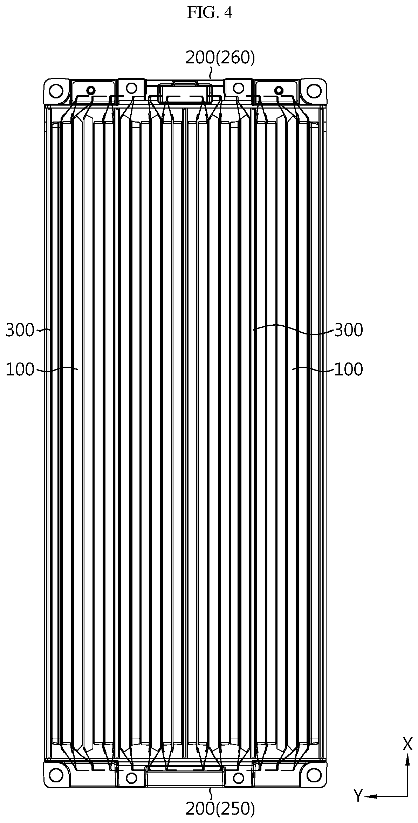

FIG. 1 is an assembled perspective view schematically showing a battery module according to an embodiment of the present disclosure, and FIG. 2 is an exploded perspective view showing the battery module of FIG. 1. Also, FIG. 3 is a cross-sectional view taken along the line A1-A1' of FIG. 1, and FIG. 4 is a cross-sectional view taken along the line A2-A2' of FIG. 1

Referring to FIGS. 1 to 4, the battery module according to the present disclosure includes a battery cell 100, a module case 200 and a blocking member 300.

A plurality of battery cells 100 may be included in the battery module. In addition, each battery cell 100 may mean a secondary battery. The secondary battery may include an electrode assembly (including a positive electrode plate, a negative electrode plate, and a separator), an electrolyte and a battery case. The plurality of battery cells 100 may be electrically connected to each other. For example, the plurality of battery cells 100 may be electrically connected to each other in series and/or in parallel through a bus bar or the like.

The plurality of battery cells 100 may be included in the battery module in a stacked form. That is, it may be regarded that the battery cells 100 according to the present disclosure are stacked in at least one direction to configure a cell stack (cell assembly). For example, as shown in FIG. 2, the plurality of battery cells 100 may be arranged side by side in a left and right direction (Y-axis direction).

The module case 200 has an empty space therein, and may be configured to accommodate the plurality of battery cells 100 in the inner space. For example, the module case 200 may include an upper plate 210, a lower plate 220, a left plate 230, a right plate 240, a front plate 250 and a rear plate 260 to define the inner space. In addition, it is possible that the cell stack is positioned in the defined inner space. Here, the module case 200 may be made of a metal and/or plastic material.

In addition, at least some of the various plate-shaped members constituting the module case 200 may be configured in an integrated form with each other. For example, the module case 200 may have a U-frame type body in which the lower plate 220, the left plate 230 and the right plate 240 are integrated with each other, as shown in FIG. 2, and the upper plate 210, the front plate 250 and the rear plate 260 may be configured to cover or seal the top, front and rear sides of the body. In this case, various fastening methods such as welding, bonding, bolting and hooking may be used for coupling and fixing the upper plate 210, the front plate 250 and the rear plate 260 to the body. Alternatively, the module case 200 may be configured in a mono frame form in which the upper plate 210, the lower plate 220, the left plate 230 and the right plate 240 are integrated with each other. However, the present disclosure is not limited to a specific material or shape of the module case 200.

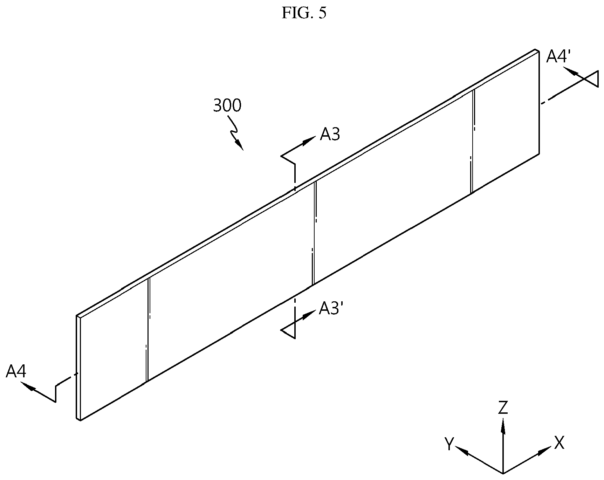

The blocking member 300 may be interposed between adjacent battery cells 100. For example, the blocking member 300 may be interposed between at least some battery cells 100 among the plurality of battery cells 100 stacked in the left and right direction. Moreover, the blocking member 300 may be provided in plurality, and the plurality of blocking members 300 may be disposed to be spaced apart from each other in the stacking direction of the battery cells 100. In addition, the blocking member 300 may be interposed between different battery cells 100. As a more specific example, one blocking member 300 may be disposed for every three or four battery cells 100. In this case, it may be regarded that three or four battery cells 100 are positioned between two blocking members 300 adjacent to each other but spaced apart from each other. The blocking member 300 will be described in more detail with reference to FIGS. 5 to 7.

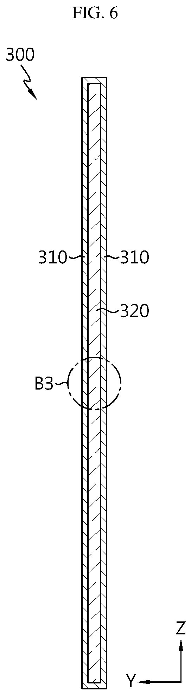

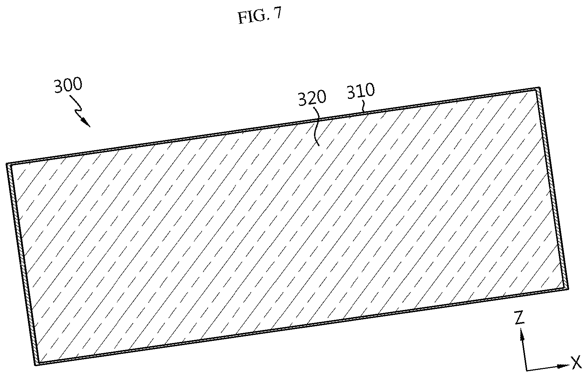

FIG. 5 is a perspective view schematically showing the configuration of a blocking member according to an embodiment of the present disclosure. Also, FIGS. 6 and 7 are a cross-sectional view taken along the line A3-A3' of FIG. 5 and a cross-sectional view taken along the line A4-A4' of FIG. 5.

Referring to FIGS. 5 to 7, the blocking member 300 includes a heat transfer preventing unit 310 and a flame transfer preventing unit 320.

Here, the heat transfer preventing unit 310 may be configured to prevent heat transfer between the battery cells 100. That is, the heat transfer preventing unit 310 may be interposed between different battery cells 100 to prevent or suppress heat generated from one battery cell 100 from being transferred to the other battery cell 100.

The flame transfer preventing unit 320 may be provided at the inner side of the heat transfer preventing unit 310. For example, the heat transfer preventing unit 310 may be disposed to cover all or a part of the outer surface of the flame transfer preventing unit 320. That is, the flame transfer preventing unit 320 may be configured to be embedded in the heat transfer preventing unit 310. In addition, the flame transfer preventing unit 320 may be configured to block flame transfer between the battery cells 100. That is, the flame transfer preventing unit 320 may be configured to prevent or suppress the flame generated from the battery cell 100 at one side from moving to the battery cell 100 at the opposite side. The heat transfer preventing unit 310 is configured to block heat between cells, whereas the flame transfer preventing unit 320 is configured to block the flame between the cells, and the heat transfer preventing unit 310 and the flame transfer preventing unit 320 may be made of different materials.

The terms such as the heat transfer preventing unit 310 and the flame transfer preventing unit 320 are used for convenience of distinction or description, but are not necessarily limited thereto. In this respect, the heat transfer preventing unit 310 and the flame transfer preventing unit 320 may be replaced by a first preventing unit and a second preventing unit, respectively.

The heat transfer preventing unit 310 and the flame transfer preventing unit 320 may be coupled by various fastening methods such as coating, bonding, welding, and bolting. For example, the heat transfer preventing unit 310 may be configured to be coated on all or a part of the outer surface of the flame transfer preventing unit 320. Alternatively, the heat transfer preventing unit 310 may be configured to be adhered to the outer surface of the flame transfer preventing unit 320 through an adhesive.

According to this configuration of the present disclosure, when a thermal event occurs inside the battery module, the thermal event may be effectively suppressed. In particular, according to an embodiment of the present disclosure, when a thermal runaway situation occurs in a specific battery cell 100 among the plurality of battery cells 100 included in the battery module, it is possible to prevent or reduce the propagation of the thermal runaway to other battery cells 100. Moreover, when a thermal event occurs in a specific battery cell 100, heat and flame may be generated together. According to this embodiment, not only heat transfer but also flame transfer may be prevented between battery cells 100. In particular, according to an embodiment of the present disclosure, in the blocking member 300, even if the thermal conductivity of the flame transfer preventing unit 320 is high, since the heat transfer preventing unit 310 is present at the outer side of the flame transfer preventing unit 320, heat transfer between the cells may be suppressed by the heat transfer preventing unit 310.

Preferably, the heat transfer preventing unit 310 may be made of a material having a lower thermal conductivity than the flame transfer preventing unit 320. In particular, the heat transfer preventing unit 310 may be made of a heat insulating material to prevent or reduce heat transfer between adjacent battery cells 100. For example, the heat transfer preventing unit 310 may be made of silicone, polyurethane, or a similar material. In addition, the heat transfer preventing unit 310 may employ various insulating materials known at the time of filing of this application.

According to this embodiment, the effect of preventing heat transfer between the cells by the blocking member 300 may be more effectively achieved. Moreover, when a thermal event occurs in a specific battery cell 100, a lot of heat may be initially generated. According to this embodiment, it is possible to suppress or reduce the transfer of the generated heat to another battery cell 100. In addition, according to this embodiment, by reducing the weight of the blocking member 300, it may be easier to lower the weight of the entire battery module.

In addition, the flame transfer preventing unit 320 may be made of a material having a higher melting point than the heat transfer preventing unit 310. In particular, the flame transfer preventing unit 320 may be made of a flame-resistant or heat-resistant material to prevent or reduce flame transfer between adjacent battery cells 100. For example, the flame transfer preventing unit 320 may include a metal material such as SUS (stainless steel). Alternatively, the flame transfer preventing unit 320 may include at least one material of GFRP (Glass Fiber Reinforced Plastic) and CFRP (Carbon Fiber Reinforced Plastic). In addition, the flame transfer preventing unit 320 may be made of a metal material such as aluminum or in the form of an alloy including such a metal material.

According to this embodiment, effective flame blocking performance may be achieved. Also, in this case, the structural strength of the blocking member may be improved, and it may be advantageous to reduce the manufacturing cost or weight of the battery module. In addition, the flame transfer preventing unit 320 may employ various flame blocking materials known at the time of filing of this application, such as ceramic materials.

According to this embodiment of the present disclosure, when a thermal event such as thermal runaway intensifies to generate a flame, it is possible to prevent flame propagation between the cells. Therefore, the spread of fire to the entire battery module due to flame propagation between the battery cells 100 may be suppressed or its speed may be delayed.

In addition, according to this embodiment, since the flame transfer preventing unit 320 may be made of a material having a higher structural rigidity than the heat transfer preventing unit 310, the mechanical strength of the blocking member 300 may be further improved. In addition, due to this, the thermal insulation performance of the heat transfer preventing unit 320 may also be stably secured. In addition, according to this embodiment, even if the heat transfer preventing unit 310 melts and disappears due to the flame generated inside the battery module, the shape of the blocking member 300 may be stably maintained by the flame transfer preventing unit 320. Therefore, it is possible to suppress the structural collapse of the battery module in the event of a fire.

In addition, the blocking member 300 may be configured to expose the flame transfer preventing unit 320 toward the battery cell 100 when the heat transfer preventing unit 310 is melted. That is, the blocking member 300 may be configured such that, in a state where the heat transfer preventing unit 310 is not melted, the flame transfer preventing unit 320 does not directly face the battery cell 100. For example, referring to FIG. 6, the heat transfer preventing unit 310 may be configured to cover the left surface and the right surface of the flame transfer preventing unit 320. Accordingly, in a state where the heat transfer preventing unit 310 exists, the left surface and the right surface of the flame transfer preventing unit 320 may not be exposed to the left battery cell 100 and the right battery cell 100. However, when heat of a temperature higher than the melting point of the heat transfer preventing unit 310 is applied to the blocking member 300 due to the generation of a flame or a high-temperature gas, the heat transfer preventing unit 310 may be melted. At this time, the heat transfer preventing unit 310 may be melted or lost, so that the surface of the flame transfer preventing unit 320, for example the left surface and/or the right surface in FIG. 6, may be exposed to the outside. Therefore, between the two battery cells 100 located at the left and right sides of the blocking member 300, the flame transfer preventing unit 320 is interposed, and by the flame transfer preventing unit 320, it is possible to block the flame spread between the two battery cells 100.

According to this embodiment of the present disclosure, in the blocking member 300, the heat transfer preventing unit 310 may be located closer to the battery cell 100 than the flame transfer preventing unit 320. Therefore, even if the thermal conductivity of the flame transfer preventing unit 320 is high, heat transfer between the battery cells 100 may be blocked first due to the heat transfer preventing unit 310 having a low thermal conductivity.

Moreover, the blocking member 300 may be configured such that the entire outer side of the flame transfer preventing unit 320 is surrounded by the heat transfer preventing unit 310. That is, the blocking member 300 may be configured such that the heat transfer preventing unit 310 covers the entire surface of the flame transfer preventing unit 320. For example, seeing the embodiment shown in FIGS. 5 to 7 and the like, the heat transfer preventing unit 310 may be configured to cover all of the left, right, upper, lower, front and rear sides of the flame transfer preventing unit 320. In this case, the heat discharged from the heat transfer preventing unit 310 may be blocked by the heat transfer preventing unit 310 before reaching the flame transfer preventing unit 320. Therefore, before the heat transfer preventing unit 310 melts or disappears, the insulating performance of the blocking member 300 may be more stably secured with respect to the heat discharged from the battery cell 100.

In addition, the blocking member 300 may be configured in a sheet form. Here, the sheet may be replaced with terms such as a plate or a pad. For example, the blocking member 300 may be configured in the form of a sheet having two wide surfaces, as shown in FIG. 5 and the like. In the configuration of the blocking member 300 as described above, two wide surfaces may be disposed to face the battery cells 100. That is, the blocking member 300 may be interposed between the two battery cells 100, and when the blocking member 300 is configured in a sheet form, the two wide surfaces may be disposed to face different battery cells 100, respectively. For example, seeing the embodiment of FIG. 3, the blocking member 300 has two wide surfaces, namely a left surface and a right surface, where the left surface may face the battery cell 100 located at the left and the right surface may face the battery cell 100 located at the right.

According to this embodiment of the present disclosure, the blocking member 300 may be interposed between the battery cells 100 more easily by the blocking member 300 configured in a sheet form. In addition, in this case, it is possible to prevent the volume of the battery module from being greatly increased by the blocking member 300.

In addition, the blocking member 300 may be configured in a form that a flame transfer preventing sheet is interposed inside a heat transfer preventing sheet. In particular, in the embodiment in which the blocking member 300 is configured in a sheet form, the heat transfer preventing unit 310 and the flame transfer preventing unit 320 included in the blocking member 300 may also be configured in a sheet form, respectively. In this case, the heat transfer preventing unit 310 and the flame transfer preventing unit 320 may be referred to as a heat transfer preventing sheet and a flame transfer preventing sheet, respectively.

For example, the blocking member 300 may be configured in a form that a flame transfer preventing sheet is inserted inside a heat transfer preventing sheet having an empty space therein, as in the embodiment of FIGS. 5 to 7. In this case, it may be regarded that the blocking member 300 is configured such that the heat transfer preventing sheet is coated on the outer side of the flame cell preventing sheet.

According to this embodiment, the blocking member 300 may be easily manufactured. In addition, according to this embodiment, the flame transfer preventing unit 320 is included inside the heat transfer preventing unit 310, and the blocking member 300 having a sheet form may be easily implemented.

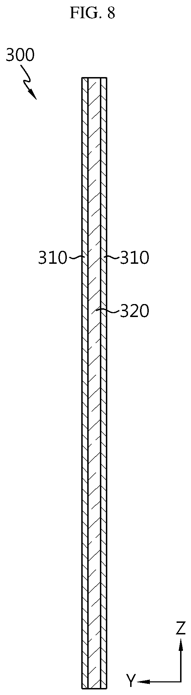

FIG. 8 is a cross-sectional view schematically showing the configuration of a blocking member according to another embodiment of the present disclosure. For example, FIG. 8 may be regarded as another modification of the cross-sectional configuration taken along the line A3-A3' of FIG. 5. For various embodiments included in this specification, including this embodiment, features identical or similar to other embodiments will not be described in detail, and features different therefrom will be described in detail.

Referring to FIG. 8, the blocking member 300 may be configured such that a part of the outer surface of the flame transfer preventing unit 320 is surrounded by the heat transfer preventing unit 310, and the other part is not surrounded by the heat transfer preventing unit 310. In particular, when the blocking member 300 is configured in a sheet form, the flame transfer preventing unit 320 may also be configured in a sheet form. At this time, the two wide surfaces of the flame transfer preventing unit 320 may be covered by the heat transfer preventing unit 310, and the other edge portion may be configured to be exposed to the outside without being covered by the heat transfer preventing unit 310. For example, seeing the embodiment shown in FIG. 8, the flame transfer preventing unit 320 has two wide surfaces, namely a left surface and a right surface, and the edges may be located at the upper, lower, front and rear sides, respectively. At this time, the heat transfer preventing unit 310 may be located at the outer sides of the left surface and the right surface of the flame transfer preventing unit 320, and may not be located at the edges of the flame transfer preventing unit 320, namely the upper, lower, front and rear sides. In particular, the heat transfer preventing unit 310 may be configured using two heat transfer sheets, the flame transfer preventing unit 320 may be configured using one flame transfer sheet, and the flame transfer sheet may be interposed between the two heat transfer sheets. That is, two heat transfer sheets may be attached to the left and right surfaces of the flame transfer sheet.

According to this embodiment of the present disclosure, the blocking member 300 may be manufactured more easily. In addition, according to this embodiment, even if the heat transfer preventing unit 310 is lost by the flame, the entire height of the blocking member 300 may be maintained as it is. Therefore, the flame transfer blocking effect by the blocking member 300 inside the battery module may be maintained as it is. For example, in the embodiment of FIG. 3, the upper end of the blocking member 300 interposed between the battery cells 100 stacked in the left and right direction may be configured to be in direct contact with the inner surface of the upper plate 210 of the module case 200, as shown in the portion B1. At this time, if there is no heat transfer preventing unit 310 at the upper side of the flame transfer preventing unit 320 as in the embodiment of the FIG. 8, the top end of the flame transfer preventing unit 320 may be in direct contact with the upper plate 210 of the module case 200. Accordingly, even if the flame is generated and the heat transfer preventing unit 310 is removed, the sealed state between the top end of the flame transfer preventing unit 320 and the module case 200 may be maintained as it is. Therefore, the flame blocking effect by the flame transfer preventing unit 320 may be stably secured. Also, in this case, even if the heat transfer preventing unit 310 is removed, the position of the blocking member 300 inside the module case 200 may be stably maintained.

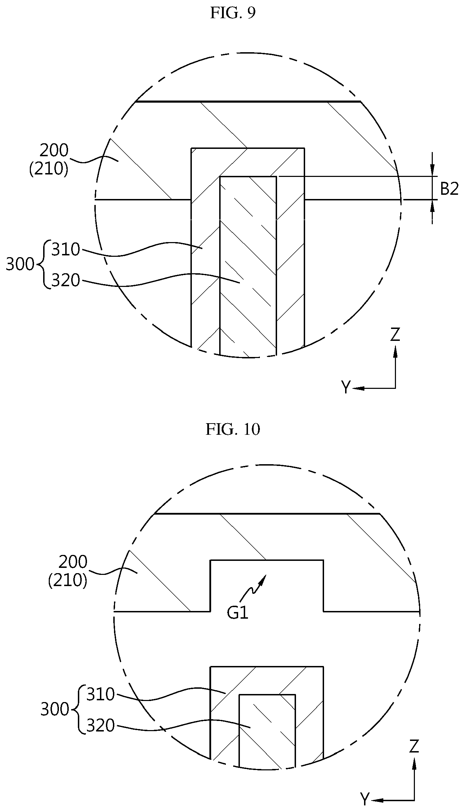

FIG. 9 is a cross-sectional view schematically showing a partial cross-sectional configuration of a battery module according to another embodiment of the present disclosure. For example, FIG. 9 is an enlarged view showing a modification of the portion B1 of FIG. 3. Also, FIG. 10 is an exploded cross-sectional view showing the configuration of FIG. 9. That is, FIG. 10 may be regarded as showing a configuration in which the blocking member 300 is separated from the module case 200 in the configuration of FIG. 9.

Referring to FIGS. 9 and 10, an end of the blocking member 300 may be inserted into the module case 200. In this case, an insert groove may be formed in the module case 200 so that the end of the blocking member 300 is inserted therein. For example, as indicated by G1 in FIG. 10, the insert groove may be formed on the inner side surface of the module case 200. In addition, the end of the blocking member 300, for example the top end of the blocking member 300, may be inserted into the insert groove G1 of the module case 200.

According to this embodiment of the present disclosure, due to the fitting configuration between the blocking member 300 and the module case 200, the blocking member 300 may be stably fixed inside the module case 200.

In particular, in the embodiment where the end of the blocking member 300 is inserted into the module case 200, the flame transfer preventing unit 320 provided in the blocking member 300 may be configured to be inserted into the insert groove of the module case 200. For example, as shown in FIG. 9, when the top end of the blocking member 300 is inserted into the insert groove G1 of the module case 200, the flame transfer preventing unit 320 may be inserted into the insert groove G1 of the module case 200 by the length as indicated by B2. That is, even in a state where the heat transfer preventing unit 310 is present in the blocking member 300, the flame transfer preventing unit 320 may have a form inserted into the module case.

According to this embodiment of the present disclosure, even if the heat transfer preventing unit 310 is melted or lost by the flame, the flame transfer preventing unit 320 may be maintained in a state of being inserted into the insert groove G1 of the module case 200 as it is. In particular, as in the embodiment of FIGS. 9 and 10, in the case of the blocking member 300 configured in a state where the end, for example the upper end, of the flame transfer preventing unit 320 is covered with the heat transfer preventing unit 310, even though the heat transfer preventing unit 310 is melted and lost, the flame transfer preventing unit 320 may not be deviated from the insert groove G1 of the module case 200. Therefore, in this case, the position of the blocking member 300 may be maintained even after the flame is generated, and it is possible to suppress the flame from passing toward the end of the blocking member 300, for example upward, as much as possible.

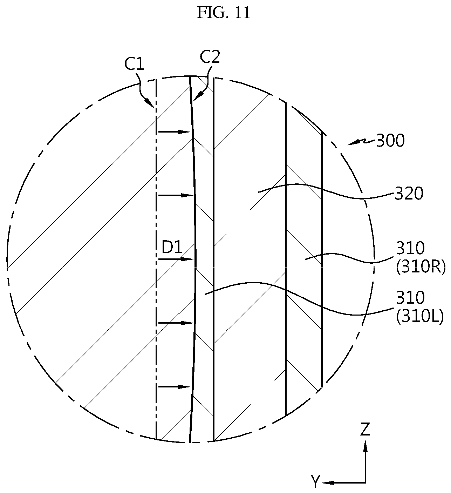

In addition, the blocking member 300 may be configured to absorb swelling of the battery cell 100. This will be described in more detail with reference to FIG. 11.

FIG. 11 is a cross-sectional view schematically showing a partial configuration of the blocking member 300 according to an embodiment of the present disclosure. For example, FIG. 11 may be regarded as showing a configuration in which the portion B3 of FIG. 6 is deformed.

Referring to FIG. 11, in the blocking member 300, the heat transfer preventing unit 310 in a sheet form, namely a left heat transfer sheet 310L and a right heat transfer sheet 310R, may be located at the left and right surfaces of the flame transfer preventing unit 320 configured in a sheet form. In addition, the battery cell 100 may be disposed at the left and right sides of the blocking member 300, respectively. At this time, when a swelling phenomenon occurs in the battery cell 100 positioned at the left or right side of the blocking member 300, pressure may be applied to the blocking member 300. For example, seeing the embodiment of FIG. 11, when a swelling phenomenon occurs in the battery cell 100 located at the left side of the blocking member 300, as indicated by the arrow D1, the blocking member 300 may be pressed in the right direction. At this time, the heat transfer preventing unit 310 may be configured to absorb this pressing force and deform the shape. That is, the left surface of the left heat transfer sheet 310L may have a shape as indicated by the dotted line C1 before swelling of the left battery cell 100. However, when swelling occurs in the left battery cell 100, the left heat transfer sheet 310L is pushed in the right direction (-Y-axis direction), and the left surface may have a shape as indicated by the solid line C2. At this time, the left heat transfer sheet 310L may be configured such that, even though the shape of the left surface is deformed due to the pressing force caused by swelling of the battery cell 100, the shape of the right surface is maintained. In addition, the left heat transfer sheet 310L may be configured such that the entire left heat transfer sheet 310L or the right surface thereof does not move in the right direction despite the pressure applied to the left surface.

To this end, the heat transfer preventing unit 310 may be at least partially made of an elastic material. For example, the heat transfer preventing unit 310 may be a silicone sheet or a polyurethane sheet. Moreover, the silicone or polyurethane material may secure both insulation and elasticity excellently. In addition, the heat transfer preventing unit 310 may be made of various other materials capable of absorbing volume expansion due to swelling of the battery cell 100, for example other various elastic materials such as rubber.

According to this embodiment of the present disclosure, due to the heat transfer preventing unit 310 provided in the blocking member 300, heat transfer between the battery cells 100 may be prevented, and it is also possible to prevent the internal structure of the battery module from being deformed or collapsed due to the swelling phenomenon of a specific battery cell 100. In particular, when the plurality of battery cells 100 are all pouch-type batteries, a swelling phenomenon of the battery cells 100 may be more severe. However, according to this embodiment, the blocking member 300, particularly the heat transfer preventing unit 310, may properly respond to the swelling phenomenon of the pouch-type battery.

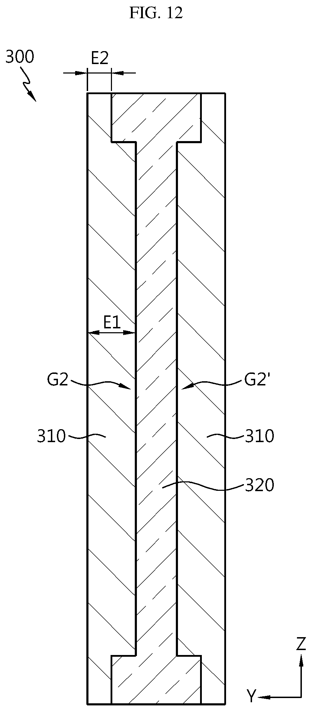

FIG. 12 is a cross-sectional view schematically showing the configuration of a blocking member 300 according to still another embodiment of the present disclosure.

Referring to FIG. 12, the heat transfer preventing unit 310 may be configured such that the center portion has a greater thickness than the end portion. More specifically, the heat transfer preventing unit 310 may be configured to be erected in the vertical direction (Z-axis direction), and the thickness of the central portion in the vertical direction is as indicated by E1 in FIG. 12. In addition, the thickness of the top end or the bottom end of the heat transfer preventing unit 310 is as indicated by E2 in FIG. 12. In this case, the heat transfer preventing unit 310 may be configured such that E1 is greater than E2. That is, the heat transfer preventing unit 310 may be formed such that the center portion is relatively thick, and the thickness is gradually increased toward the end, for example toward the upper, lower, front and rear ends.

According to this embodiment of the present disclosure, the thermal insulation performance or the swelling absorption performance of the heat transfer preventing unit 310 may be improved more effectively. That is, in the battery cell 100, volume expansion may occur most in the portion facing the center portion of the heat transfer preventing unit 310 in general, and according to this embodiment, since the heat transfer preventing unit 310 is formed thickly in the corresponding portion, the volume expansion may be sufficiently absorbed. In addition, in the battery cell 100, a lot of heat may be generated in the center portion, and according to this embodiment, due to the heat transfer preventing unit 310 sufficiently formed in the center portion, the heat transfer in the corresponding portion may be effectively prevented. In particular, when the battery cell 100 is a pouch-type battery, the center portion may be a portion facing the accommodation portion of the pouch-type cell. Therefore, when the center portion of the heat transfer preventing unit 310 is formed to be relatively thick as in this embodiment, it is possible to effectively respond to volume expansion or heat generation occurring in the accommodation portion of the pouch-type cell.

The flame transfer preventing unit 320 has a groove formed in a concave shape in the center portion. For example, seeing the embodiment of FIG. 12, the flame transfer preventing unit 320 is configured to be erected in a vertical direction, and a groove is formed in the center portion between the top end and the distal end, as indicated by G2, G2'. In this case, the flame transfer preventing unit 320 may be regarded as having a cross-sectional configuration in an approximately 'I' shape. In this configuration, the heat transfer preventing unit 310 may also be filled in the central grooves G2, G2' of the flame transfer preventing unit 320. That is, even though the heat transfer preventing unit 310 is configured to completely cover the left and right surfaces of the flame transfer preventing unit 320, the heat transfer preventing unit 310 may be present more in the central grooves G2, G2' of the flame transfer preventing unit 320.

According to this embodiment of the present disclosure, even without partially changing the thickness of the blocking member 300, by thickening the center portion of the heat transfer preventing unit 310, the configuration to improve the swelling absorption and heat insulation performance of the battery cell 100 may be easily implemented. In particular, the total thickness of the blocking member 300 obtained by summing the thickness of the heat transfer preventing unit 310 and the thickness of the flame transfer preventing unit 320 may be uniform. For example, in the embodiment of FIG. 12, even though the thickness of the heat transfer preventing unit 310 is not constant but varies from the top to the bottom, the overall thickness of the blocking member 300 may be uniformly formed from the top to the bottom. Therefore, when the blocking member 300 is interposed between the battery cells 100, unnecessary space consumption may be prevented, and the battery cells 100 and the blocking member 300 may be well arranged side by side. In addition, according to this embodiment, since at least a part of the heat transfer preventing unit 310 is inserted into the central grooves G2, G2' of the flame transfer preventing unit 320, the coupling force between the heat transfer preventing unit 310 and the flame transfer preventing unit 320 may be further improved. In particular, according to this embodiment, the heat transfer preventing unit 310 may be suppressed from moving in the front, rear, upper and lower directions of the flame transfer preventing unit 320.

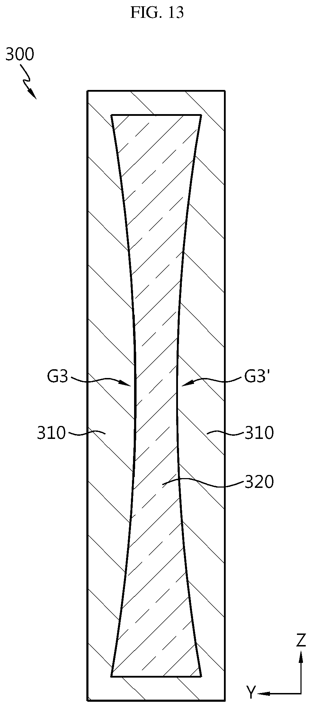

FIG. 13 is a cross-sectional view schematically showing the configuration of a blocking member 300 according to still another embodiment of the present disclosure.

Referring to FIG. 13, in the blocking member 300, the flame transfer preventing unit 320 may have recessed grooves formed on the center portions of the left and right surfaces, as indicated by G3 and G3', and these grooves may be formed to be curved or inclined. That is, the thickness of the flame transfer preventing unit 320 in the left and right direction (Y-axis direction) may be formed to gradually decrease from the top end toward the center portion and gradually increase again from the center portion toward the bottom end. In addition, the flame transfer preventing unit 320 is regarded as having a groove because the thickness of the center portion is thin as described above. In addition, the grooves G3, G3' formed in the center portion as described above may be filled with the heat transfer preventing unit 310. Accordingly, the heat transfer preventing unit 310 may be formed such that the center portion has a greater thickness than the end portion.

According to this embodiment of the present disclosure, it is possible to more efficiently respond to the swelling form of the battery cell 100. In particular, when swelling of the battery cell 100 occurs, the center portion of the battery cell 100 may expand most, and the degree of expansion may gradually decrease toward the end. According to this embodiment, it may be regarded that the heat transfer preventing unit 310 and the flame transfer preventing unit 320 are configured to correspond to the expansion shape of the battery cell 100. Therefore, it is possible to more appropriately respond to the swelling of the battery cell 100.

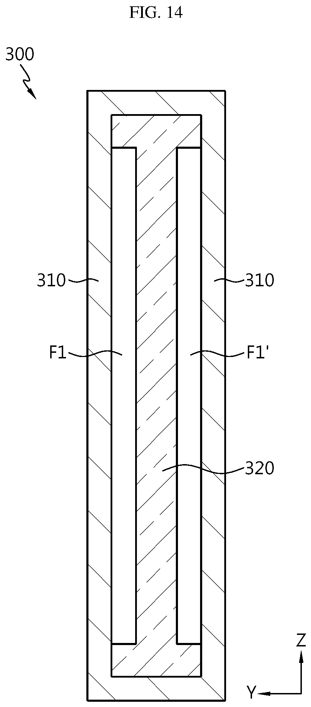

FIG. 14 is a cross-sectional view schematically showing the configuration of a blocking member 300 according to still another embodiment of the present disclosure.

Referring to FIG. 14, in the flame transfer preventing unit 320, a groove is formed in a concave shape in the center portion, and an empty space not filled with the heat transfer preventing unit 310 may be formed in the concave groove of the center portion. For example, as indicated by F1 in FIG. 14, an empty space, such as an air layer, may exist between the left surface of the flame transfer preventing unit 320 and the left heat transfer preventing unit 310. In addition, as indicated by F1' in FIG. 14, an empty space may be formed between the right surface of the flame transfer preventing unit 320 and the right heat transfer preventing unit 310.

According to this embodiment of the present disclosure, the empty spaces F1, F1' between the flame transfer preventing unit 320 and the heat transfer preventing unit 310 may function as a space for absorbing swelling of the battery cell 100. Also, according to this embodiment, by lowering the weight of the blocking member 300, it may be advantageous to reduce the weight of the entire battery module.

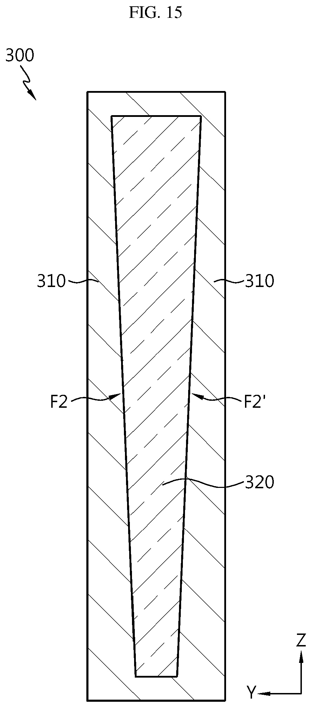

FIG. 15 is a cross-sectional view schematically showing the configuration of a blocking member 300 according to still another embodiment of the present disclosure.

Referring to FIG. 15, the flame transfer preventing unit 320 may be configured to have a thickness gradually increasing or decreasing from one end to the other end. In particular, the flame transfer preventing unit 320 may be configured to have an inclined surface formed on the outer surface. For example, as shown in FIG. 15, the flame transfer preventing unit 320 may have an inclined surface F2, F2' formed such that the thickness gradually decreases in the lower direction (-Z-axis direction) from the top.

According to this embodiment of the present disclosure, when a flame occurs inside the battery module, the flame transfer preventing unit 320 may be exposed to the outside, and it is possible to control the discharge or movement direction of the venting gas or flame along the inclined surfaces F2, F2' formed at the flame transfer preventing unit 320. For example, according to the configuration as shown in FIG. 15, by the inclined surfaces F2, F2' of the flame transfer preventing unit 320, it is possible to induce the gas or flame in the lower direction as much as possible. In particular, the gas or flame may have a property to be directed upward, and according to this embodiment, it is possible to suppress the gas or flame from moving in the upper direction. Therefore, by preventing the gas or flame from being discharged to the upper side of the battery module, it may be more advantageous to protect a device or a driver located above the battery module.

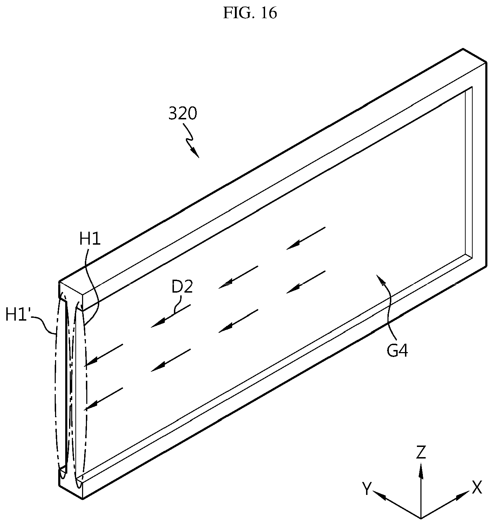

FIG. 16 is a perspective view schematically showing the configuration of a flame transfer preventing unit 320 provided in the blocking member 300 according to still another embodiment of the present disclosure. In particular, in the configuration of FIG. 16, only the form of the flame transfer preventing unit 320 is shown in the blocking member 300, and the heat transfer preventing unit 310 is removed. For example, it may be regarded that the embodiment of FIG. 16 shows a configuration in which the heat transfer preventing unit 310 is melted and lost due to a flame or the like.

Referring to FIG. 16, in the flame transfer preventing unit 320, a groove is formed in the center portion. That is, the flame transfer preventing unit 320 may have grooves concave toward the inner side, as indicated by G4, on the left surface and the right surface, respectively. In addition, the flame transfer preventing unit 320 may be configured such that at least one side of the groove G4 is open to the outside. For example, the groove G4 formed on the right surface of the flame transfer preventing unit 320 may be configured to be open at the front side as indicated by H1 in FIG. 16. In addition, the groove formed on the left surface of the flame transfer preventing unit 320 may be configured to be open at the front side as portion indicated by H1' in FIG. 16.

According to this embodiment of the present disclosure, due to the open portion H1, H1' of the groove formed at the flame transfer preventing unit 320, the venting gas may be discharged. For example, as shown in FIG. 16, when the open portions H1, H1' are formed at the front side with respect to the groove G4 of the flame transfer preventing unit 320, the venting gas introduced into the groove G4 of the flame transfer preventing unit 320 may be discharged to the outside through the front open portion H1, H1'. In this case, the gas may move forward, along the surface of the flame transfer preventing unit 320, as indicated by the arrow D2 in FIG. 16. Therefore, according to this embodiment, the discharge of the venting gas and its direction may be appropriately controlled or induced.

In particular, a venting hole (not shown) may be formed in the module case 200 of the battery module. For example, the venting hole may be formed in the front plate 250 of the module case 200. At this time, when the venting gas is guided to the front side through the flame transfer preventing unit 320 of the blocking member 300 as shown in FIG. 16, the venting gas may be smoothly and quickly discharged into the venting hole. Therefore, when gas is generated due to an abnormal situation such as thermal runaway inside the battery module, explosion of the battery module may be prevented, and safety may be ensured when the venting gas is discharged.

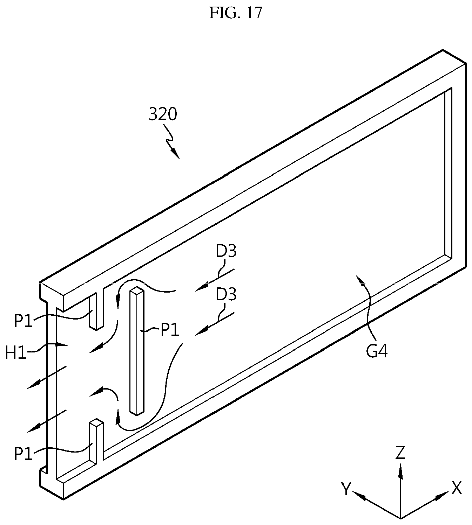

FIG. 17 is a perspective view schematically showing the configuration of a flame transfer preventing unit 320 provided in the blocking member 300 according to still another embodiment of the present disclosure. In the configuration of FIG. 17, only the form of the flame transfer preventing unit 320 is shown in the blocking member 300, and the heat transfer preventing unit 310 is removed, similar to FIG. 16. That is, it may be regarded that the embodiment of FIG. 17 shows a configuration in which the heat transfer preventing unit 310 is melted and lost due to a flame or the like, similar to FIG. 16.

Referring to FIG. 17, the flame transfer preventing unit 320 has a groove G4 formed in the center portion, similar to FIG. 16 and an open portion H1 is formed at one side, for example at the front side, so that gas or the like is discharged to the open portion H1. However, in the embodiment of FIG. 17, a blocking protrusion configured to protrude outward as indicated by P1 is formed in the groove G4 of the flame transfer preventing unit 320. For example, the groove G4 is formed on the right surface of the flame transfer preventing unit 320, and the blocking protrusion P1 protruding in the right direction may be formed in the groove G4.

In the configuration of the flame transfer preventing unit 320, the venting gas introduced into the groove G4 is discharged toward the open portion H1 located in the front, and the flow of the venting gas may be blocked by the blocking protrusion P1. However, the blocking protrusion P1 does not completely block the venting gas from being discharged from the groove G4 toward the open portion H1, but may be configured such that the flow direction of the venting gas is bent. For example, as shown in FIG. 17, a plurality of blocking protrusions P1 may be formed in the groove G4 of the flame transfer preventing unit 320, so that the venting gas is bent upward and/or downward while being discharged to the front side as indicated by the arrow D3. In addition, although only the right surface of the flame transfer preventing unit 320 is shown in FIG. 17, a groove G4 may also be formed on the left surface of the flame transfer preventing unit 320, and a blocking protrusion P1 may be formed in the groove.

In particular, the blocking protrusion P1 may be configured to be elongated in a direction orthogonal to the discharge direction of the gas or the like. For example, referring to FIG. 17, with respect to the flame transfer preventing unit 320 of the blocking member 300, the venting gas may be discharged to the front side (-X-axis direction) through the groove G4. In this case, the blocking protrusion P1 may be configured to be elongated in the vertical direction (Z-axis direction) that is orthogonal to the discharge direction of the venting gas.

According to this embodiment of the present disclosure, in the process of inducing the venting gas through the flame transfer preventing unit 320 of the blocking member 300, by lengthening the discharge path of the venting gas, it is possible to lower the temperature of the venting gas. In addition, according to this embodiment, since a bent portion is formed in the discharge path of the venting gas, when the flame is discharged together with the venting gas, it is possible to block the flame with strong straightness from being discharged to the outside. In addition, according to this embodiment, it is possible to suppress spark or active material particles contained in the venting gas from being discharged to the outside. Therefore, in this case, it is possible to prevent a fire from occurring outside the battery module or in another battery cell 100.

In particular, in this embodiment, the blocking protrusion P1 may be located at the open portion H1 of the flame transfer preventing unit 320. In this case, it is possible to prevent or reduce the problem that the blocking protrusion P1 rather disturbs the flow of the venting gas into the groove G4.

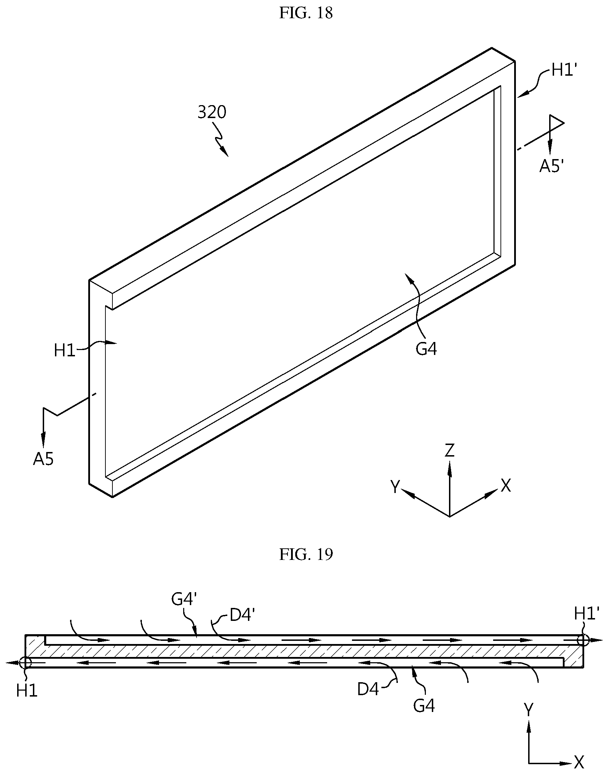

FIG. 18 is a perspective view schematically showing the configuration of a flame transfer preventing unit 320 provided in the blocking member 300 according to still another embodiment of the present disclosure. Also, FIG. 19 is a cross-sectional view taken along the line A4-A4' of FIG. 18. The configuration shown in FIGS. 18 and 19 may also be regarded as showing a state where the heat transfer preventing unit 310 is removed.

Referring to FIGS. 18 and 19, in the grooves formed on both surfaces of the flame transfer preventing unit 320, the open portions may be formed at different sides. More specifically, the grooves G4', G4 may be formed on the right and left surfaces of the flame transfer preventing unit 320, respectively, and the open portions H1, H1' may be formed at the grooves G4', G4, respectively. In this case, the open portion H1 of the right surface may be formed at the front side of the flame transfer preventing unit 320, and the open portion (H1') of the left surface may be formed at the rear side of the flame transfer preventing unit 320. That is, the open portions formed on both surfaces of the flame transfer preventing unit 320 may be formed at opposite sides.

In this case, the venting gas discharged from the battery cell 100 located at the right side of the flame transfer preventing unit 320 may move to the front side (-X-axis direction) along the right surface of the flame transfer preventing unit 320, as indicated by the arrow D4 in FIG. 19. In addition, the venting gas discharged from the battery cell 100 located at the left side of the flame transfer preventing unit 320 may move to the rear side (+X-axis direction) along the left surface of the flame transfer preventing unit 320, as indicated by the arrow D4' in FIG. 19.

According to this embodiment of the present disclosure, the discharge direction of the gas generated from the battery cell 100 disposed at the left side with respect to one blocking member 300 may be different from, particularly opposite to, the discharge direction of the gas generated from the battery cell 100 disposed at the right side. Accordingly, it is possible to prevent the venting gas of high temperature or high pressure from being concentrated to a specific part.

In addition, according to this embodiment, it is possible to more effectively prevent the venting gas discharged to one side from flowing toward a battery cell 100 located beyond the flame transfer blocking unit. For example, in the embodiment of FIGS. 18 and 19, when the venting gas generated from the battery cell 100 located at the right side of the flame transfer preventing unit 320 is discharged toward the right open portion H1 of the flame transfer preventing unit 320, it is possible to prevent the venting gas from flowing toward the battery cell 100 located at the left side of the flame transfer preventing unit 320 through the left open portion H1' of the flame transfer preventing unit 320. Therefore, according to this embodiment of the present disclosure, the effect of preventing thermal runaway transition between the battery cells 100 may be more effectively secured.

In the battery module according to the present disclosure, each of the plurality of battery cells 100 may be a pouch-type secondary battery as shown in FIGS. 2 and 3. In this case, each secondary battery may include an accommodation portion and a sealing portion.

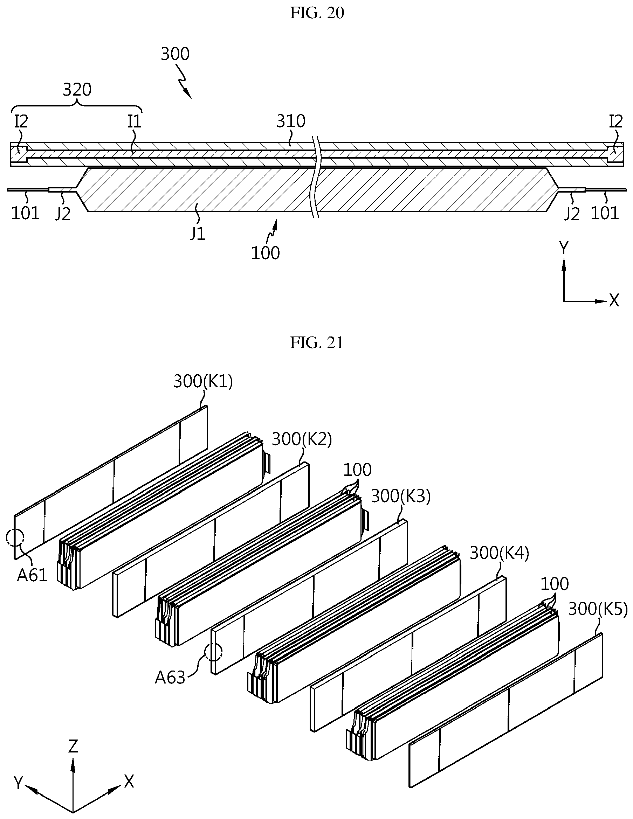

In this configuration, the flame transfer preventing unit 320 may be formed so that a portion facing the sealing portion has a greater thickness than a portion facing the accommodation portion. This will be described in more detail with reference to FIG. 20.

FIG. 20 is a diagram schematically showing a partial configuration of the battery module according to an embodiment of the present disclosure, as viewed from the top. In FIG. 20, for convenience of explanation, only one battery cell 100 and one blocking member 300 are illustrated.

Referring to FIG. 20, the battery cell 100 may be a pouch-type secondary battery, and in this case, the battery cell 100 may include an accommodation portion as indicated by J1 and a sealing portion as indicated by J2. Here, the accommodation portion J1 may be a portion that accommodates an electrode assembly (including a positive electrode plate, a negative electrode plate, and a separator) and an electrolyte in the inner space of the pouch exterior. In addition, the sealing portion J2 may be located at the edge of the accommodation portion J1, and may be a portion that seals the inner space of the accommodation portion J1 in a state where the pouch exterior is fused. The configuration of the accommodation portion J1 and the sealing portion J2 is widely known at the time of filing of this application invention, and will not be described in detail here.

Corresponding to the battery cell 100 of this type, in a state where the flame transfer preventing unit 320 is interposed between the plurality of battery cells 100, the portion facing the accommodation portion J1 may have a smaller thickness than the portion facing the sealing portion J2. More specifically, seeing the configuration shown in FIG. 20, in the flame transfer preventing unit 320, the portion facing the accommodation portion J1 may be referred to as I1, and the portion facing the sealing portion J2 may be referred to as I2. In this case, in the flame transfer preventing unit 320, the portion indicated by I2 may be formed to be thicker than the portion indicated by I1. In particular, in a state where the blocking member 300 is interposed between the pouch-type battery cells 100, the portion facing the sealing portion J2 may be an end side of the blocking member, namely an end in the front and rear direction. Accordingly, the flame transfer preventing unit 320 may be regarded as being formed such that has an end thereof, namely the front and rear ends and/or the upper and lower ends facing the sealing portion J2 of the battery cell 100 when being in the form of an erected sheet, is formed thicker than the center portion corresponding to the accommodation portion J1 of the battery cell 100.

According to this embodiment of the present disclosure, the flame blocking effect between the pouch-type battery cells 100 may be further improved. In particular, when the plurality of pouch-type battery cells 100 are stacked side by side, an empty space may be formed more at the sealing portion J2, compared to the accommodation portion J1. Accordingly, when flame is discharged from the specific battery cell 100, the discharged flame and high-temperature gas may be directed toward the sealing portion J2 of the battery cell 100. At this time, in this embodiment, since the flame transfer preventing unit 320 is formed to be thicker in the sealing portion J2, it is possible to more effectively block the flame located at the sealing portion J2 from propagating toward other battery cells 100.

In particular, the pouch-type battery cell 100 has a substantially rectangular shape, and the sealing portion J2 may be formed at four or three edges around the accommodation portion J1. At this time, the electrode lead 101 may protrude toward some sealing portions J2 among several sealing portions J2. For example, in the pouch-type battery cell 100 in a vertically erected form, the sealing portion J2 may be positioned at the front, rear, upper and lower portions, respectively. At this time, the electrode lead 101 may be provided to protrude toward the sealing portion at the front side and the sealing portion at the rear side, respectively, as shown in FIG. 20. At this time, the sealing portion from which the electrode lead 101 protrudes may be referred to as a terrace portion in order to be distinguished from other sealing portions. In this case, the flame transfer preventing unit 320 may be formed so that the portion facing the terrace portion has a greater thickness than the portion facing the accommodation portion. Moreover, the thickness of the portion facing the terrace portion may be formed to be greater than the thickness of the portion facing the sealing portion other than the terrace portion.

According to this embodiment of the present disclosure, the flame blocking effect of the flame transfer preventing unit 320 may be further improved. In particular, since the terrace portion may have a larger area than the other sealing portion J2, a flame or high-temperature venting gas may be more concentrated. Therefore, as in this embodiment, when the portion corresponding to the terrace portion has a greater thickness among various portions of the flame transfer preventing unit 320, the flame blocking performance between the battery cells 100 may be secured more stably even when the flame is concentrated on the terrace portion. In addition, according to this embodiment, due to the difference in thickness of the flame transfer preventing unit 320, the electrode lead may be stably protected against the flame.

In addition, seeing the embodiment of FIG. 20, in the heat transfer preventing unit 310, the portion facing the accommodation portion J1 of the battery cell 100 may have a greater thickness than the portion facing the sealing portion J2 of the battery cell 100. In this case, even if a relatively large amount of heat or expansion occurs in the accommodation portion J1 of the battery cell 100, since the heat transfer preventing unit 310 is formed thicker, the generated heat or volume expansion may be appropriately absorbed.

The blocking member 300 may be disposed not only between the battery cells 100 but also between the battery cell 100 and the module case 200. For example, referring to FIGS. 2 and 3, when a plurality of battery cells 100 are disposed in the left and right direction (Y-axis direction) to form a cell assembly, the blocking member 300 may be disposed at the left and right sides of the cell assembly, respectively. In this case, it may be regarded that the blocking member 300 is disposed between the cell assembly and the module case 200.

According to this embodiment of the present disclosure, when heat or flame is generated inside the battery module, it is possible to block or suppress the transfer of heat or flame to the outside of the battery module. In particular, outside the battery module, other battery modules or other components of the battery pack, such as a battery management system (BMS), may be disposed. According to this embodiment, it is possible to minimize the transfer of heat or flame to other battery modules or the BMS.

FIG. 21 is an exploded perspective view showing a partial configuration of the battery module according to still another embodiment of the present disclosure.

Referring to FIG. 21, a plurality of pouch-type cells 100 may be disposed in the left and right direction (Y-axis direction) in an erected state so that the accommodation portion faces the left and right direction. At this time, in each battery cell 100, the electrode leads 101 may protrude in the front and rear direction (X-axis direction). The blocking member 300 may be disposed in plurality along the stacking direction (Y-axis direction) of the plurality of battery cells 100. In particular, some of the plurality of blocking members 300 may be positioned outside the cell stack, and others may be positioned inside the cell stack. More specifically, in the embodiment of FIG. 21, as indicated by K1 to K5, five blocking members 300 may be disposed to be spaced apart from each other in the left and right direction. Here, the first member K1 and the fifth member K5 are disposed at the outermost left and right sides of the cell stack, and the second member K2, the third member K3 and the fourth member K4 are disposed inside the cell stack.

In this embodiment, two or more of the plurality of blocking members 300 may be configured to have different compression ratios. For example, in the embodiment of FIG. 21, two or more of the five blocking members 300 indicated by K1 to K5 may be configured to have different compression ratios. Here, the compression ratio may mean the degree of compression when pressure is applied in the thickness direction. For example, the compression ratio of each blocking member 300 may mean the degree to which the thickness decreases in the Y-axis direction when pressure is applied to the outer surface as indicated by D1 in the embodiment of FIG. 11. Therefore, a high compression ratio may mean that relatively more compression can be achieved when the same force is applied.

In particular, the plurality of blocking members 300 may be configured to have a difference in compression ratio between the blocking member 300 disposed outside the cell stack and the blocking member 300 disposed inside the cell stack. Moreover, the outer blocking member 300 may be configured to have a lower compression ratio than the inner blocking member 300. For example, in the embodiment of FIG. 21, the first member K1 and the fifth member K5 disposed outside the cell stack may have lower compression ratios than the second member K2, the third member K3 and the fourth member K4 disposed inside the cell stack.

According to this embodiment, when swelling occurs in the battery cells 100 included in the cell stack, the problem of damage to the battery cells 100 can be prevented more effectively while securing the ability to cope with swelling. That is, the inner blocking members such as the second to fourth members K2 to K4 may absorb swelling of the cell stack well due to a relatively high compression ratio. Meanwhile, outer blocking members such as the first and fifth members K1 and K5 may suppress excessive movement of the outermost battery cell 100 due to a relatively low compression ratio.

In particular, at least one side of the cell stack, for example the bottom end of each battery cell 100, may be adhered and fixed to the module case 200 by an adhesive. For example, in the embodiment of FIG. 21, a thermal resin may be interposed as an adhesive between the lower portion of the cell stack and the upper surface of the lower plate 220. Also, when swelling occurs in the plurality of battery cells 100 belonging to the cell stack, the outermost battery cell 100 may move the most. At this time, if the moving distance of the outermost cell becomes longer in a state where the lower end is adhesively fixed, there is a high possibility that the battery cell 100 will be torn.

However, according to the embodiment, excessive movement of the outermost battery cell 100 may be suppressed by a low compression ratio of the outer blocking members such as K1 and K5. In addition, the swelling of the cell stack may be well absorbed by the blocking members 300, which are located relatively inside, such as K2 to K4. Therefore, the tearing problem of the outermost battery cell 100 may be prevented. In addition, in this case, since the thickness of the outermost blocking member 300 can be configured thin, the effect of widening the inner space of the module case 200 may also be obtained. Therefore, it may also contribute to improving the energy density of the battery module.

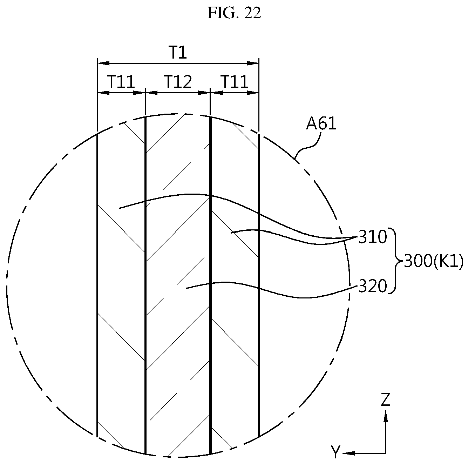

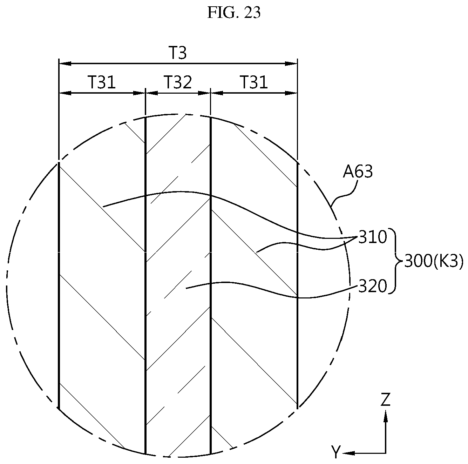

As described above, a representative embodiment in which the blocking members 300 have different compression ratios will be described in more detail with reference to FIGS. 22 and 23.

FIGS. 22 and 23 are enlarged views showing the configuration of different blocking members 300 included in the battery module of FIG. 21. In particular, FIG. 22 may be an enlarged front view showing the portion A61 of FIG. 21, and FIG. 23 may be an enlarged front view showing the portion A63 of FIG. 21.

Referring to FIGS. 22 and 23, the plurality of blocking members 300 may be configured to have different thicknesses. For example, in the embodiment of FIG. 21, the outermost blocking member K1 may be configured to have a thickness as indicated by T1 in FIG. 22, and the inner blocking member K3 may be configured to have a thickness as indicated by T3 in FIG. 23. In this case, the thickness T1 of the outermost blocking member K1 may be thinner than the thickness T3 of the inner blocking member K3. That is, T1 and T3 may have a relationship of T1<T3. Here, the two outermost blocking members K1, K5 may have the same thickness, and the three inner blocking members K2, K3, K4 may have the same thickness.

Alternatively, when a plurality of inner blocking members are provided, a plurality of inner blocking members may be configured to have different thicknesses. For example, in the embodiment of FIG. 21, among the three inner blocking members K2, K3, K4, the inner blocking member K3 located in the center may be configured to have a greater thickness than the other two inner blocking members K2, K4 located relatively outside. In this case, it may be regarded that the thickness of the blocking member 300 sequentially increases from the outside to the inside of the cell stack.

Moreover, in the plurality of blocking members 300, the heat transfer preventing unit 310 may mainly play a role of absorbing swelling. Accordingly, in the plurality of blocking members 300, the heat transfer preventing unit 310 may be configured to have different thicknesses. In particular, the heat transfer preventing unit 310 of the blocking member positioned on the outer side may have a smaller thickness than the heat transfer preventing unit 310 of the blocking member positioned on the inner side.

For example, the heat transfer preventing unit 310 of the outermost blocking member K1 may have a thickness as indicated by T11 in FIG. 22, and the heat transfer preventing unit 310 of the inner blocking member K3 may have a thickness as indicated by T31 in FIG. 23. At this time, T11 and T31 may be set to have a relationship of T11<T31. That is, the thickness T31 of the heat transfer preventing unit 310 of the outermost blocking member K1 may be thinner than the thickness T31 of the heat transfer preventing unit 310 of the inner blocking member K3. In this case, the total thickness T1 of the outermost blocking members K1 may be thinner than the total thickness T3 of the inner blocking members K3.

According to this embodiment, since the heat transfer preventing unit 310 of the outermost blocking member is formed relatively thinner, the effect of limiting the movement of the outermost battery cell 100 may be enhanced. Accordingly, it is possible to effectively prevent a tearing phenomenon of the outermost battery cell 100 due to excessive movement.

In addition, the flame transfer preventing unit 320 of the outermost blocking member K1 may have a thickness indicated by T12 in FIG. 22, and the flame transfer preventing unit 320 of the inner blocking member K3 may have a thickness indicated by T32 in FIG. 23. At this time, T12 and T32 may be set to have a relationship of T12>T32. That is, the thickness T32 of the flame transfer preventing unit 320 of the outermost blocking member K1 may be thicker than the thickness T32 of the flame transfer preventing unit 320 of the inner blocking member K3. Moreover, in the outermost blocking member K1, the flame transfer preventing unit 320 may be formed relatively thick and the heat transfer preventing unit 310 may be formed relatively thin, compared to the inner blocking member K3. Since the flame transfer preventing unit 320 may have higher rigidity than the heat transfer preventing unit 310, according to the embodiment, the performance of suppressing pushing of the outermost battery cell 100 may be more excellently secured. Also, in this case, the outermost blocking member K1 and the inner blocking member K3 may have the same thickness, or the difference in thickness may not be large.

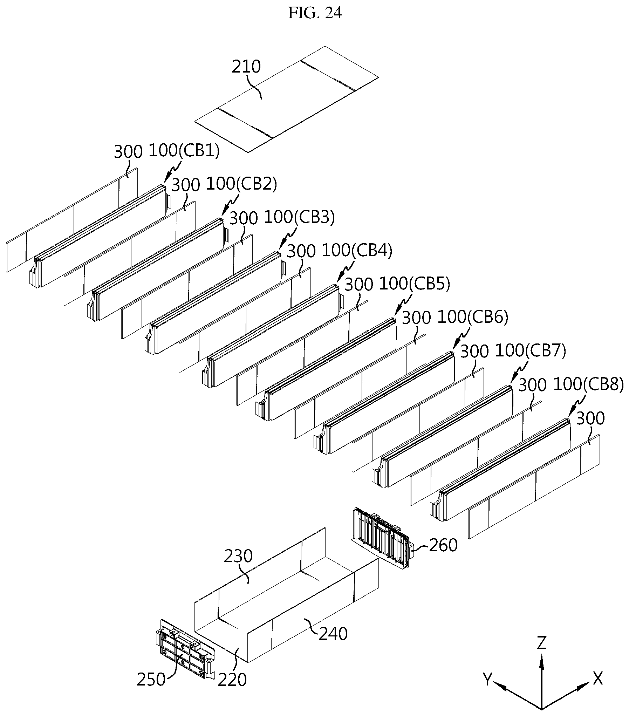

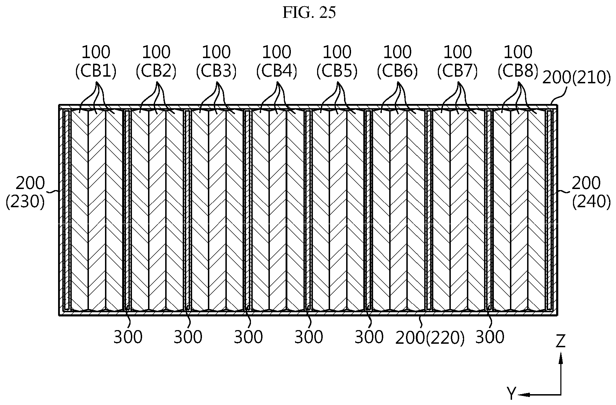

Also, the blocking member 300 is interposed only between different cell banks. This will be described in more detail with reference to FIGS. 24 and 25.

FIG. 24 is an exploded perspective view showing the battery module according to still another embodiment of the present disclosure. FIG. 25 is a cross-sectional view of the battery module of FIG. 24. Regarding to this embodiment, features different from the former embodiments will be explained in detail.

Referring to FIGS. 24 and 25, a plurality of battery cells 100 included in the battery module are grouped into several cell banks, as indicated by CB1 to CB8. Also, the plurality of cell banks CB1 to CB8 may be connected in series with each other. That is, the plurality of battery cells 100 may include two or more cell banks connected in series.

In addition, a plurality of battery cells 100 is included in each cell bank CB1 to CB8. At this time, the battery cells 100 in each cell bank may be connected in parallel with each other. For example, in the embodiments of FIGS. 24 and 25, each cell bank may include three battery cells 100 connected in parallel.

According to the invention, the blocking member 300 is interposed only between different cell banks. For example, as shown in FIGS. 24 and 25, when eight cell banks CB1 to CB8 are included in the battery module, the blocking member 300 is interposed only between different cell banks, respectively.

According to this embodiment, even if thermal runaway or the like occurs inside some cell banks, propagation of thermal runaway to other serially connected cell banks may be prevented or suppressed. Accordingly, even if a voltage drop of the battery module occurs due to a gas emission or fire generation of a specific cell bank, the voltage drop may occur step by step in a cell bank unit. Therefore, it is possible to obtain an effect of delaying the voltage drop as much as possible by lowering the voltage drop rate of the entire battery module.

Moreover, in this case, the safety of the battery module or a device to which the battery module is applied may be improved. For example, even if a situation such as thermal runaway occurs in a battery module mounted in an electric vehicle or the like, the voltage drop may be made as slowly as possible. Therefore, the driver may continuously drive the electric vehicle for a certain period of time and move it to a safe point such as the shoulder of a road as much as possible.

In order to increase the energy density of the battery module and secure stability even in swelling or vibration, it is necessary to properly design the dimensions of components or space included in a given space inside the module case 200.

In the case of the battery module according to the present disclosure, a stacked unit formed by stacking a plurality of components may be accommodated in the inner space of the module case 200. Here, the stacked unit may include the battery cell 100 and the blocking member 300. In particular, the blocking member 300 may be disposed outside and/or in a space between the battery cells 100. In addition, an adhesive member may be interposed in the stacked unit to fix various components. For example, the adhesive member may be positioned between two battery cells 100 and/or between the battery cell 100 and the blocking member 300 to bring different components into close contact. Here, the adhesive member may be configured such that an adhesive is applied using a spray method or the like, or may be configured such that an adhesive sheet or an adhesive pad is attached to the cell surface. In particular, even if an adhesive is applied by spraying or the like, the adhesive member may be prepared in the form of a sheet or pad having a certain thickness when the adhesive is cured.

In this embodiment, the overall width of the stacked unit may be calculated by the following formula. In this case, the width may mean the total length of the stacked unit set in the direction in which the plurality of battery cells 100 are stacked (e.g., Y-axis direction of FIG. 24), and may have a unit of mm or the like. ${W}_{T} = {W}_{C} + {W}_{O} + {W}_{I} + {W}_{A}$

Here, W_{T} may mean the entire width of the stacked unit, W_{C} may mean the total thickness of all battery cells, W_{O} may mean the entire width of the outermost pad, and W_{I} may mean the entire width of the internal pad. At this time, the outermost pad is the outermost blocking member 300, such as K1 or K5 in FIG. 21, and the internal pad is the inner blocking member 300 located inside the cell stack, namely between the battery cells 100, as shown in K2 to K4 in FIG. 21. Also, W_{A} may mean the entire width of the adhesive member. W_{O}, W_{I}, W_{A}, and the like may have a length unit such of mm or the like.

In the equation, W_{C} may be derived by multiplying the total number of battery cells (N_{C}) by the thickness (T_{C}) of each battery cell as follows. ${W}_{C} = {N}_{C} * {T}_{C}$

In addition, W_{O} may be calculated as follows using the number of outermost pads (N_{O}), thickness (T_{O}) of each outermost pad, and an initial compression ratio (C_{O}) of the outermost pad. ${W}_{O} = {N}_{O} * \left({T}_{O}*\left(1-{C}_{O}\right)\right)$

Here, the initial compression ratio (C_{O}) may mean a compression ratio of the outermost pad in a state where swelling does not occur in the battery cell after the stacked unit is inserted and assembled into the module case. That is, the initial compression ratio (C_{O}) may mean the degree of initial compression of the outermost pad when assembling the battery module. For example, if the outermost pad is compressed by 15% compared to the state before pressing while the stacked unit is inserted inside the module case, the initial compression ratio (C_{O}) may be 0.15.

In addition, W_{I} may be calculated as follows using the number of internal pads (N_{I}), thickness (T_{I}) of each internal pad, and the initial compression ratio (C_{I}) of the internal pad. ${W}_{I} = {N}_{I} * \left({T}_{I}*\left(1-{C}_{I}\right)\right)$

Here, the initial compression ratio (C_{I}) may mean a compression ratio of the internal pad in a state where swelling does not occur in the battery cell after the stacked unit is inserted and assembled into the module case. That is, the initial compression ratio (C_{I}) may mean the degree to which the internal pad is compressed when the battery module is initially assembled. For example, if the internal pad is compressed by 20% compared to the state before pressurization while the stacked unit is inserted inside the module case, the initial compression ratio (C_{I}) may be 0.2.

Also, W_{A} may be calculated as follows using the number of adhesive members (N_{A}) and thickness (T_{A}) of each adhesive member. ${W}_{A} = {N}_{A} * {T}_{A}$

Meanwhile, the initial compression ratio of the blocking member, namely the initial compression ratio (C_{O}) of the outermost pad and/or the initial compression ratio (C_{I}) of the internal pad, may be set to an appropriate degree. In particular, the initial compression ratio of the blocking member may be set to 8% or more, moreover 10% or more, particularly 12% or more. In addition, the initial compression ratio of the blocking member may be set to 22% or less, moreover 20% or less, and particularly 18% or less. For example, the initial compression ratio of the blocking member may be set to 10% to 20%. When the initial compression ratio of the blocking member is set to be smaller than this range, movement of the stacked unit inside the module case may increase due to tolerances or the like, and structural stability may deteriorate. Meanwhile, if the initial compression ratio of the blocking member exceeds this range, it may be difficult to insert the stacked unit into the module case. Accordingly, by appropriately setting the initial compression ratio of the blocking member as described above, assembly and/or structural stability of the battery module may be further improved.

A battery pack according to the present disclosure may include one or more battery modules according to the present disclosure described above. In addition, the battery pack according to the present disclosure may further include various components other than these battery modules, for example components of the battery pack known at the time of filing of this application, such as a BMS or a bus bar, a pack case, a relay, and a current sensor. In addition, in the battery pack according to the present disclosure, the module case 200 described above may serve as a pack case. In this case, components of the battery pack such as a BMS, a bus bar, and a relay may be included in the module case 200. In this case, the battery cell 100 is also called a cell-to-pack in that it is directly stored in the pack case.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, a control device such as an electronic control unit (ECU), and the like in addition to the battery module according to the present disclosure.

Meanwhile, in this specification, terms indicating directions such as "up", "down", "left", "right", "front" and "rear" used, but these terms are merely for convenience of description and may vary depending on the location of an object or the location of an observer, as apparent to those skilled in the art.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

100: battery cell
200: module case
210: upper plate, 220: lower plate, 230: left plate, 240: right plate, 250: front plate, 260: rear plate
300: blocking member
310: heat transfer preventing unit, 320: flame transfer preventing unit

## Claims

1. A battery module, comprising:
two or more cell banks (CB1- CB8), each cell bank (CB1-CB8) including a plurality of battery cells (100) stacked in at least one direction;
a module case (200) configured to accommodate the plurality of battery cells (100) in an inner space; and
a blocking member (300) including a heat transfer preventing unit (310) configured to prevent heat transfer between the adjacent battery cells (100) and a flame transfer preventing unit (320) provided to an inner side of the heat transfer preventing unit (310) and configured to block a flame between the adjacent battery cells (100),
**characterized in that** the blocking member (300) is only interposed between two different cell banks (CB1-CB8), and
wherein the flame transfer preventing unit (320) has a groove (G2, G2', G3, G3', G4) formed in a concave shape in a center portion.

2. The battery module according to claim 1,
wherein the heat transfer preventing unit (310) is made of a material having lower thermal conductivity than the flame transfer preventing unit (320).

3. The battery module according to claim 1,
wherein the flame transfer preventing unit (320) is made of a material having a higher melting point than the heat transfer preventing unit (310).

4. The battery module according to claim 1,
wherein the blocking member (300) is configured to expose the flame transfer preventing unit (320) towards the battery cell (100) when the heat transfer preventing unit (310) is melted.

5. The battery module according to claim 1,
wherein the blocking member (300) is configured in a sheet form.

6. The battery module according to claim 1,
wherein the blocking member (300) is configured such that a flame transfer preventing sheet is interposed inside a heat transfer prevention sheet.

7. The battery module according to claim 1,
wherein the blocking member (300) is configured to absorb swelling of the battery cell (100).

8. The battery module according to claim 1,
wherein the heat transfer preventing unit (310) is formed so that a center portion has a greater thickness than an end portion.

9. The battery module according to any one of claims 1 to 8,
wherein the flame transfer preventing unit (320) is configured such that at least one side of the groove (G2, G2') formed in the center portion is open to the outside.

10. The battery module according to claim 1,
wherein each of the plurality of battery cells (100) is a pouch-type secondary battery having an accommodation portion (J1) and a sealing portion (J2), and
the flame transfer preventing unit (320) is formed so that, between the plurality of battery cells (100), a portion facing the sealing portion (J2) has a greater thickness than a portion facing the accommodation portion (J1).

11. The battery module according to claim 1,
wherein the blocking member (300) is arranged in plurality along a stacking direction of the plurality of battery cells (100), and
two or more of the plurality of blocking members (300) are configured to have difference compression ratios,
wherein the compression ratio of the blocking member (300) means the degree of which the thickness decreases in compression when pressure is applied to an outer surface of the blocking member (300).

12. A battery pack, comprising the battery module according to any one of claims 1 to 11.

13. A vehicle, comprising the battery module according to any one of claims 1 to 11.

## Patentansprüche

1. Batteriemodul, umfassend:
• zwei oder mehr Zellenblöcke (CB1-CB8), wobei jeder Zellenblock (CB1-CB8) eine Vielzahl von Batteriezellen (100) enthält, die in mindestens einer Richtung gestapelt sind;
• ein Modulgehäuse (200), das konfiguriert ist, um die Vielzahl von Batteriezellen (100) in einem Innenraum aufzunehmen; und
• ein Blockierelement (300), das eine Wärmeübertragungs-Verhinderungseinheit (310), die konfiguriert ist, um eine Wärmeübertragung zwischen den benachbarten Batteriezellen (100) zu verhindern, und eine Flammenübertragungs-Verhinderungseinheit (320) enthält, die an einer Innenseite der Wärmeübertragungs-Verhinderungseinheit (310) vorgesehen und konfiguriert ist, um eine Flamme zwischen den benachbarten Batteriezellen (100) zu blockieren,
**dadurch gekennzeichnet, dass** das Blockierelement (300) nur zwischen zwei verschiedenen Zellenblöcken (CB1-CB8) eingefügt ist, und
wobei die Flammenübertragungs-Verhinderungseinheit (320) eine Nut (G2, G2', G3, G3', G4) aufweist, die in einer konkaven Form in einem mittleren Abschnitt ausgebildet ist.

2. Batteriemodul nach Anspruch 1,
wobei die Wärmeübertragungs-Verhinderungseinheit (310) aus einem Material hergestellt ist, das eine geringere Wärmeleitfähigkeit aufweist als die Flammenübertragungs-Verhinderungseinheit (320).

3. Batteriemodul nach Anspruch 1,
wobei die Flammenübertragungs-Verhinderungseinheit (320) aus einem Material hergestellt ist, das einen höheren Schmelzpunkt aufweist als die Wärmeübertragungs-Verhinderungseinheit (310).

4. Batteriemodul nach Anspruch 1,
wobei das Blockierelement (300) konfiguriert ist, um die Flammenübertragungs-Verhinderungseinheit (320) zu der Batteriezelle (100) hin freizulegen, wenn die Wärmeübertragungs-Verhinderungseinheit (310) geschmolzen ist.

5. Batteriemodul nach Anspruch 1,
wobei das Blockierelement (300) in Folienform konfiguriert ist.

6. Batteriemodul nach Anspruch 1,
wobei das Blockierelement (300) so konfiguriert ist, dass eine Flammenübertragungs-Verhinderungsfolie im Inneren einer Wärmeübertragungs-Verhinderungsfolie angeordnet ist.

7. Batteriemodul nach Anspruch 1,
wobei das Blockierelement (300) konfiguriert ist, um ein Aufquellen der Batteriezelle (100) zu absorbieren.

8. Batteriemodul nach Anspruch 1,
wobei die Wärmeübertragungs-Verhinderungseinheit (310) so ausgebildet ist, dass ein mittlerer Abschnitt eine größere Dicke aufweist als ein Endabschnitt.

9. Batteriemodul nach einem der Ansprüche 1 bis 8,
wobei die Flammenübertragungs-Verhinderungseinheit (320) so konfiguriert ist, dass mindestens eine Seite der in dem mittleren Abschnitt ausgebildeten Nut (G2, G2') nach außen hin offen ist.

10. Batteriemodul nach Anspruch 1,
wobei jede der Vielzahl von Batteriezellen (100) eine Pouch-Sekundärbatterie ist, die einen Aufnahmeabschnitt (J1) und einen Dichtungsabschnitt (J2) aufweist, und
die Flammenübertragungs-Verhinderungseinheit (320) so ausgebildet ist, dass zwischen der Vielzahl von Batteriezellen (100) ein dem Dichtungsabschnitt (J2) zugewandter Abschnitt eine größere Dicke aufweist als ein dem Aufnahmeabschnitt (J1) zugewandter Abschnitt.

11. Batteriemodul nach Anspruch 1,
wobei das Blockierelement (300) in einer Vielzahl entlang einer Stapelrichtung der Vielzahl von Batteriezellen (100) angeordnet ist, und
zwei oder mehr der Vielzahl von Blockierelementen (300) so konfiguriert sind, dass sie unterschiedliche Kompressionsverhältnisse aufweisen,
wobei das Kompressionsverhältnis des Blockierelements (300) das Ausmaß bedeutet, in dem die Dicke bei Kompression abnimmt, wenn Druck auf eine Außenfläche des Blockierelements (300) ausgeübt wird.

12. Batteriepack, umfassend das Batteriemodul nach einem der Ansprüche 1 bis 11.

13. Fahrzeug, umfassend das Batteriemodul nach einem der Ansprüche 1 bis 11.

## Revendications

1. Module de batterie, comprenant :
• deux blocs de cellules (CB1- CB8) ou plus, chaque bloc de cellules (CB1-CB8) comprenant une pluralité de cellules de batterie (100) empilées dans au moins une direction ;
• un boîtier de module (200) configuré pour loger la pluralité de cellules de batterie (100) dans un espace interne ; et
• un élément de blocage (300) comprenant une unité de prévention de transfert de chaleur (310) configurée pour empêcher un transfert de chaleur entre les cellules de batterie (100) adjacentes et une unité de prévention de transfert de flamme (320) placée sur un côté interne de l'unité de prévention de transfert de chaleur (310) et configurée pour bloquer une flamme entre les cellules de batterie (100) adjacentes,
**caractérisé en ce que** l'élément de blocage (300) est uniquement interposé entre deux blocs de cellules (CB1-CB8) différents, et
dans lequel l'unité de prévention de transfert de flamme (320) présente une rainure (G2, G2', G3, G3', G4), de forme concave, dans une partie centrale.

2. Module de batterie selon la revendication 1,
dans lequel l'unité de prévention de transfert de chaleur (310) est faite d'un matériau ayant une conductivité thermique plus faible que celle de l'unité de prévention de transfert de flamme (320).

3. Module de batterie selon la revendication 1,
dans lequel l'unité de prévention de transfert de flamme (320) est faite d'un matériau ayant un point de fusion plus élevé que celui de l'unité de prévention de transfert de chaleur (310).

4. Module de batterie selon la revendication 1,
dans lequel l'élément de blocage (300) est configuré pour exposer l'unité de prévention de transfert de flamme (320) à la cellule de batterie (100) lorsque l'unité de prévention de transfert de chaleur (310) est fondue.

5. Module de batterie selon la revendication 1,
dans lequel l'élément de blocage (300) est configuré sous la forme d'une feuille.

6. Module de batterie selon la revendication 1,
dans lequel l'élément de blocage (300) est configuré de telle sorte qu'une feuille de prévention de transfert de flamme soit interposée à l'intérieur d'une feuille de prévention de transfert de chaleur.

7. Module de batterie selon la revendication 1,
dans lequel l'élément de blocage (300) est configuré pour absorber le gonflement de la cellule de batterie (100).

8. Module de batterie selon la revendication 1,
dans lequel l'unité de prévention de transfert de chaleur (310) est formée de telle sorte qu'une partie centrale présente une épaisseur supérieure à celle d'une partie d'extrémité.

9. Module de batterie selon l'une quelconque des revendications 1 à 8,
dans lequel l'unité de prévention de transfert de flamme (320) est configurée de telle sorte qu'au moins un côté de la rainure (G2, G2') formée dans la partie centrale soit ouvert vers l'extérieur.

10. Module de batterie selon la revendication 1,
dans lequel chacune de la pluralité de cellules de batterie (100) est une batterie secondaire de type poche ayant une partie de logement (J1) et une partie d'étanchéité (J2), et
l'unité de prévention de transfert de flamme (320) est formée de telle sorte que, entre la pluralité de cellules de batterie (100), une partie faisant face à la partie d'étanchéité (J2) présente une épaisseur supérieure à celle d'une partie faisant face à la partie de logement (J1).

11. Module de batterie selon la revendication 1,
dans lequel l'élément de blocage (300) est agencé en pluralité le long d'une direction d'empilement de la pluralité de cellules de batterie (100), et
deux ou plus de la pluralité d'éléments de blocage (300) sont configurés pour avoir des taux de compression différents,
dans lequel le taux de compression de l'élément de blocage (300) désigne le degré selon lequel l'épaisseur diminue lors de la compression lorsqu'une pression est appliquée sur une surface externe de l'élément de blocage (300).

12. Bloc-batterie, comprenant le module de batterie selon l'une quelconque des revendications 1 à 11.

13. Véhicule, comprenant le module de batterie selon l'une quelconque des revendications 1 à 11.
